# EUROPEAN PATENT APPLICATION

(11) **EP 2 091 279 A2**
(43) Date of publication of application: **19.08.2009**
(21) Application number: 09151471.1
(22) Date of filing: 27.01.2009
(51) Int. Cl.: H04W 4/22

(54) **Communication device, communication control method and recording medium**

(30) Priority: 18.02.2008 JP 2008035971
(71) Applicant: NEC Corporation, Minato-ku Tokyo (JP)
(72) Inventor: Matsui, Junichiro, Tokyo 108-8001 (JP)
(74) Representative: Betten & Resch

(57) **Abstract**

A communication device includes a reception unit that receives an emergency alarm signal transmitted from a broadcasting station in an emergency, a conversion unit that executes first conversion processing for converting an analog transmission signal to a digital transmission signal at a first bit rate when the emergency alarm signal is not being received, and executes second conversion processing for converting the analog transmission signal to a digital transmission signal at a second bit rate that is lower than the first bit rate when the emergency alarm signal has been received; and a transmission unit that transmits the digital transmission signal.

## Description

This application is based upon and claims the benefit of priority from Japanese patent application No. 2008-35971, filed on February 18, 2008, the disclosure of which is incorporated herein in its entirety by reference.

### BACKGROUND OF THE INVENTION

### 1. Field of the Invention

The present invention relates to a communication device, a communication control method, and a recording medium.

### 2. Description of the Related Art

Techniques have been known for preventing congestion on communication networks.

JP-7-240767-A describes a communication adaptor device which reduces the rate of a clock which determines the communication speed when congestion occurs on a frame relay network which connects to a facsimile terminal.

JP-2006-518159-A describes a radio communication method for reducing the bit rate of data when an increase in the number of connected radio transmission/reception units causes a significant exacerbation of quality on a radio link established between a radio network control device and a radio transmission/reception unit.

JP-7-38465-A describes a radio communication system which reduces the bit rate of data when an increased amount of traffic passes through a base station.

JP-2006-5412-A describes a terminal device which limits an operation of receiving a call in a disaster area and an operation of initiating a call to the disaster area, i.e., which limits calls when an emergency alarm signal from a broadcasting station is received in the event of a large-scale disaster such as a large earthquake.

When a large-scale natural disaster such as a large earthquake occurs, a telephone network is used for confirming safety in the disaster area, sending expressions of sympathy, making inquiries and the like. This results in an increase in the number of calls. Consequently, congestion is likely to occur on the telephone network. A communication carrier controls ordinary calls, such as limiting the amount of connections to the disaster area in order to prevent congestion on the telephone network, and reserves connections for important emergency communications related to police and fire-fighting operations and the like.

In normal conditions, a high sound quality, and thus a high bit rate of audio data is required for telephones. On the other hand, in the event of a disaster, the tendency is that there is a greater need for a higher telephone call connection ratio than for higher sound quality in phones.

Basically, in the techniques described in JP-7-240767-A, JP-2006-518159-A, or JP-7-38465-A, the bit rate of data is reduced when congestion is detected. Accordingly, congestion is likely to occur temporarily. Therefore, if a disaster occurs, the connection ratio is likely to exacerbate, at least when congestion is detected.

The amount of calls that can be made on a network in a disaster area is limited upon receipt of an emergency alarm signal in the technique described in JP-2006-5412. Generally, users who are not present in of a disaster area recognize the occurrence of the disaster by watching and/or hearing broadcast programs including the emergency alarm signal. Thus, according to the technique described in JP-2006-5412, the amount of calls that can be made on a network in a disaster area is limited at the time when an increase in the number of calls is anticipated. As such, congestion can be prevented from occurring.

However, when the amount of call connections (telephone calls) is limited in a situation in which a disaster occurs, the need for the network to handle many calls which will occur as a result from the disaster will be limited, i.e., a high call connection ratio cannot be satisfied.

### SUMMARY OF THE INVENTION

An exemplary object of the present invention is to provide a communication device, a communication control method, and a recording medium which are capable of solving the problem mentioned above.

A communication device according to an exemplary aspect of the invention includes:
a reception unit that receives an emergency alarm signal transmitted from a broadcasting station in an emergency;
a conversion unit that executes first conversion processing for converting an analog transmission signal to a digital transmission signal at a first bit rate when the emergency alarm signal is not being received, and executes second conversion processing for converting the analog transmission signal to a digital transmission signal at a second bit rate that is lower than the first bit rate when the emergency alarm signal has been received; and
a transmission unit that transmits the digital transmission signal.

A communication control method according to an exemplary aspect of the invention is a communication control method that is carried out by a communication device, the communication control method including:
receiving an emergency alarm signal transmitted from a broadcasting station in an emergency;
performing a conversion for executing first conversion processing for converting an analog transmission signal to a digital transmission signal at a first bit rate when the emergency alarm signal is not being received, and executing second conversion processing for converting the analog transmission signal to a digital transmission signal at a second bit rate that is lower than the first bit rate when the emergency alarm signal has been received; and
transmitting the digital transmission signal.

A computer readable recording medium according to an exemplary aspect of the invention is a computer readable recording medium which has recorded thereon a program for causing a computer to execute:
a reception procedure for receiving an emergency alarm signal transmitted from a broadcasting station in an emergency;
a conversion procedure for performing a conversion for executing first conversion processing for converting an analog transmission signal to a digital transmission signal at a first bit rate when the emergency alarm signal is not being received, and executing second conversion processing for converting the analog transmission signal to a digital transmission signal at a second bit rate that is lower than the first bit rate when the emergency alarm signal has been received; and
a transmission procedure for transmitting the digital transmission signal.

The above and other objects, features, and advantages of the present invention will become apparent from the following description with reference to the accompanying drawings which illustrate an example of the present invention.

### BRIEF DESCRIPTION OF THE DRAWINGS

Fig. 1 is a block diagram for describing a first exemplary embodiment of the present invention;
Fig. 2 is a block diagram representing a first exemplary embodiment of a portable telephone terminal;
Fig. 3 is a block diagram representing a first exemplary embodiment of an IP telephone terminal;
Fig. 4 is a block diagram representing a first exemplary embodiment of VoIP gateway 11;
Fig. 5 is a block diagram showing a second exemplary embodiment of a portable telephone terminal; and
Fig. 6 is a block diagram showing a second exemplary embodiment of an IP telephone terminal.

### DETAILED DESCRIPTION OF EXEMPLARY EMBODIMENTS

In the following, exemplary embodiments of the present invention will be described with reference to the drawings.

### (First Exemplary Embodiment)

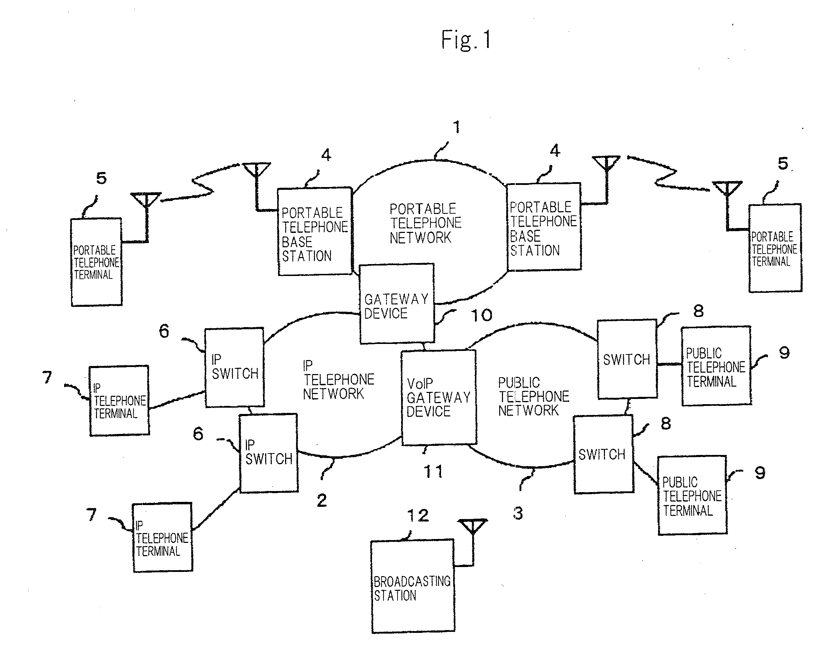

Fig. 1 is a block diagram for describing a first exemplary embodiment of the present invention.

In Fig. 1, telephone networks used in the first exemplary embodiment includes portable telephone network 1, IP (Internet Protocol) telephone network 2, and public telephone network 3.

Portable telephone base stations 4 and portable telephone terminals 5 are connected to portable telephone network 1. IP switches 6 and IP telephone terminals 7 are connected to IP telephone network 2. Switches 8 and public telephone terminals 9 are connected to public telephone network 3.

Digital audio signals are communicated on portable telephone network 1 and IP telephone network 2. Analog voice signals are communicated on public telephone network 3.

Portable telephone network 1, IP telephone network 2, and public telephone network 3 are respectively connected to one another by the action of gateway device 10 and VoIP (Voice over Internet Protocol) gateway device 11. Thus, a call can be made between terminals of the respective networks.

Broadcasting station 12 serves, for example, one-segment broadcasting (ground digital broadcasting) for portable terminals.

Broadcasting station 12 transmits an emergency alarm signal (emergency signal) in an emergency such as a large-scale disaster. For example, broadcasting station 12 sends a signal which additionally provides alarm sound, when a large-scale disaster such as a large earthquake occurs, to serve emergency alarm broadcasting for communicating disaster information through television broadcasting or radio broadcasting.

In this regard, broadcasting station 12 broadcasts an emergency alarm signal including area code information for identifying a disaster area. Generally, the area code information may be referred to as disaster area information.

Also, in ground digital broadcasting, a ground digital receiver is configured to have the ability to monitor the presence or absence of the emergency alarm signal embedded in a broadcast data stream in conformity with laws and standards.

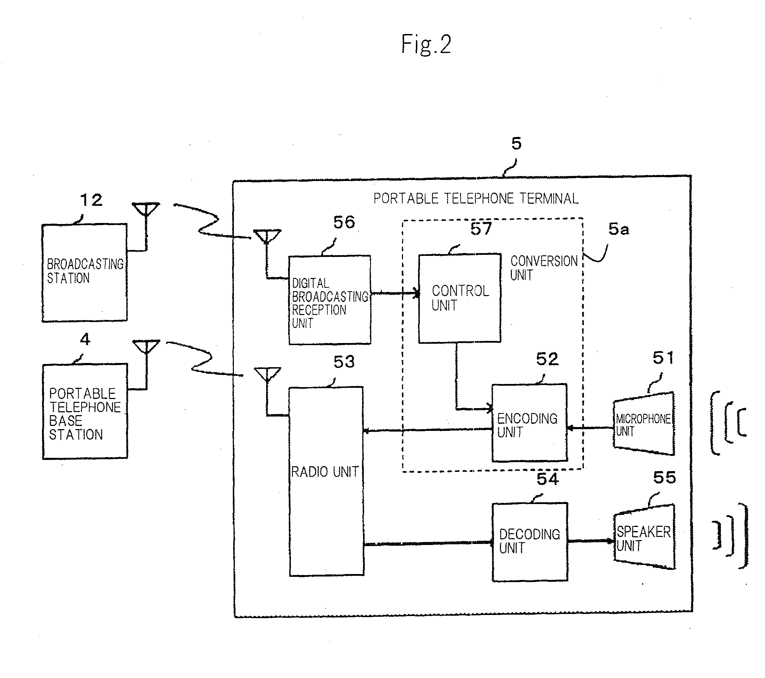

Fig. 2 is a block diagram representing a first exemplary embodiment of portable telephone terminal 5.

In Fig. 2, portable telephone terminal 5 can be generally referred to as a communication device.

Portable telephone terminal 5 comprises microphone unit 51, encoding unit 52, radio unit 53, decoding unit 54, speaker unit 55, digital broadcasting reception unit 56, and control unit 57. Encoding unit 52 and control unit 57 are included in conversion unit 5a.

Microphone unit 51 can be generally referred to as microphone means. Microphone unit 51 receives a voice, and generates an analog voice signal corresponding to the received voice.

Encoding unit 52 can be generally referred to as encoding means. Encoding unit 52 converts an analog transmission signal to a digital transmission signal. In this exemplary embodiment, encoding unit 52 uses an analog voice signal output from microphone unit 51 as the analog transmission signal. Encoding unit 52 generates a digital voice signal by encoding the analog voice signal.

Radio unit 53 can be generally referred to as transmitting means. Radio unit 53 transmits the digital transmission signal generated by encoding unit 52, i.e., digital voice signal. This digital voice signal is received by portable telephone base station 4.

Also, radio unit 53 receives a digital voice signal destined to portable telephone terminal 5 from portable telephone base station 4. Radio unit 53 provides the received digital voice signal to decoding unit 54.

Decoding unit 54 decodes the digital voice signal provided from radio unit 53 to generate an analog voice signal. Decoding unit 54 provides the analog voice signal to speaker unit 55. Speaker unit 55 outputs a voice corresponding to the analog voice signal that has been provided.

Digital broadcasting reception unit 56 can be generally referred to as receiving means.

Digital broadcasting reception unit 56 receives an emergency alarm signal transmitted from broadcasting station 12 in an emergency. Upon receipt of the emergency alarm signal, digital broadcasting reception unit 56 provides control unit 57 with a reception confirmation signal which indicates that the emergency alarm signal has been received.

Control unit 57 can be generally referred to as control means.

Control unit 57 causes encoding unit 52 to execute first conversion processing for converting an analog transmission signal (analog voice signal) to a digital transmission signal (digital voice signal) at a first bit rate when control unit 57 is not receiving reception confirmation from digital broadcasting reception unit 56, i.e., when no emergency alarm signal has been received.

In this exemplary embodiment, encoding unit 52 executes the first conversion processing when encoding unit 52 is not receiving a signal from control unit 57. Accordingly, in this exemplary embodiment, control unit 57 causes encoding unit 52 to execute the first conversion processing by providing no signal to encoding unit 52 when the emergency alarm signal is not being received.

Also, control unit 57 causes encoding unit 52 to execute second conversion processing for converting an analog transmission signal (analog voice signal) to a digital transmission signal (digital voice signal) at a second bit rate that is lower than the first bit rate when control unit 57 has received the reception confirmation signal from digital broadcasting reception unit 56, i.e. when the emergency alarm signal has been received.

In this exemplary embodiment, encoding unit 52 executes the second conversion processing upon receipt of a bit rate reduction signal from control unit 57. Accordingly, in this exemplary embodiment, control unit 57 causes encoding unit 52 to execute the second conversion processing by providing the bit rate reduction signal to encoding unit 52 when the emergency alarm signal has been received.

Conversion unit 5a can be generally referred to as converting means.

Conversion unit 5a executes the first conversion processing when the emergency alarm signal is not being received, and executes the second conversion processing when the emergency alarm signal has been received.

In this regard, portable telephone terminal 5 may be implemented by a computer which includes a communication feature and a voice input/output feature. In this event, the computer operates in accordance with a program recorded on a recording medium (recording medium readable by the computer) such as a hard disk drive. In this event, the computer reads and executes the program from the recording medium to function as microphone unit 51, encoding unit 52, radio unit 53, decoding unit 54, speaker unit 55, digital broadcasting reception unit 56, and control unit 57.

Next, the operation of portable telephone terminal 5 will be described.

Digital broadcasting reception unit 56 transmits a reception confirmation signal to control unit 57 upon receipt of an emergency alarm signal broadcast from broadcasting station 12 when a large-scale disaster occurs.

Upon receipt of the reception confirmation signal from digital broadcasting reception unit 56, control unit 57 transmits a bit rate reduction signal to encoding unit 52.

Encoding unit 52 encodes an analog voice signal from microphone unit 51 at a bit rate normally supported by each portable telephone terminal 5 to generate a digital voice signal at the first bit rate when the bit rate reduction signal is not being transmitted, i.e., in normal conditions. In other words, encoding unit 52 converts the analog voice signal from microphone unit 51 to a digital voice signal at the first bit rate in normal conditions.

On the other hand, encoding unit 52 reduces the bit rate to a minimum level at which a conversation can be made, when the bit rate reduction signal is being transmitted, i.e., when a disaster occurs, and encodes the analog voice signal from microphone unit 51 at the reduced bit rate to generate a digital voice signal at the second bit rate. In other words, encoding unit 52 converts the analog voice signal from microphone unit 51 to a digital voice signal at the second bit rate when a disaster occurs.

The digital voice signal generated in encoding unit 52 is transmitted to portable telephone base station 4 through radio unit 53.

Also, upon receipt of a digital voice signal from portable telephone base station 4, radio unit 53 provides the received digital voice signal to decoding unit 54. Decoding unit 54 decodes the digital voice signal provided from radio unit 53 to generate an analog voice signal. Decoding unit 54 provides the analog voice signal to speaker unit 55. Speaker unit 55 outputs a voice corresponding to the provided analog voice signal.

According to this exemplary embodiment, conversion unit 5a executes the first conversion processing when the emergency alarm signal is not being received, and executes the second conversion processing when the emergency alarm signal has been received.

Consequently, the amount of communicated data can be reduced from the time when the emergency alarm signal has been received, i.e., from the time when the number of calls is anticipated to increase. Accordingly, congestion can be avoided on the telephone network even if the amount of calls that are to be connected is not strictly limited, for example, in an emergency. It is therefore possible to minimize a reduction of the call connection ratio required for telephones in the event of a disaster.

Also, in this exemplary embodiment, encoding unit 52 uses an analog voice signal from microphone unit 51 as an analog transmission signal.

In this event, the amount of call data can be reduced on the telephone network from the time when the number of calls is anticipated to increase. It is therefore possible to minimize a reduction of the call connection ratio required for telephones in the event of a disaster.

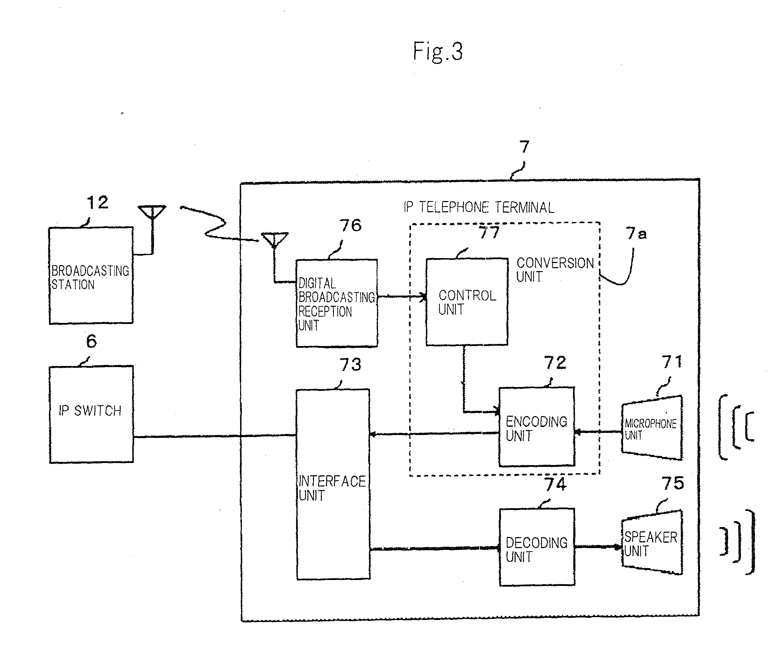

Fig. 3 is a block diagram representing a first exemplary embodiment of IP telephone terminal 7.

In Fig. 3, IP telephone terminal 7 can be generally referred to as a communication device.

IP telephone terminal 7 includes microphone unit 71, encoding unit 72, interface unit 73, decoding unit 74, speaker unit 75, digital broadcasting reception unit 76, and control unit 77. Encoding unit 72 and control unit 77 are included in conversion unit 7a.

Microphone unit 71 can be generally referred to as microphone means. Microphone unit 71 receives a voice signal, and generates an analog voice signal corresponding to the received voice signal.

Encoding unit 72 can be generally referred to as encoding means. Encoding unit 72 converts an analog transmission signal to a digital transmission signal. In this exemplary embodiment, encoding unit 72 uses an analog voice signal output from microphone unit 71 as the analog transmission signal. Encoding unit 72 generates a digital voice signal by encoding the analog voice signal.

Interface unit 73 can be generally referred to as transmitting means. Interface unit 73 transmits the digital transmission signal generated by encoding unit 72, i.e., digital voice signal. This digital voice signal is received by IP switch 6.

Also, interface unit 73 receives a digital voice signal destined to IP telephone terminal 7 from IP switch 6. Interface unit 73 provides the received digital voice signal to decoding unit 74.

Decoding unit 74 decodes the digital voice signal provided from interface unit 73 to generate an analog voice signal. Decoding unit 74 provides the analog voice signal to speaker unit 75. Speaker unit 75 outputs a voice signal corresponding to the analog voice signal that has been provided.

Digital broadcasting reception unit 76 can be generally referred to as receiving means.

Digital broadcasting reception unit 76 receives an emergency alarm signal transmitted from broadcasting station 12 in an emergency. Upon receipt of the emergency alarm signal, digital broadcasting reception unit 76 provides control unit 77 with a reception confirmation signal which indicates that the emergency alarm signal has been received.

Control unit 77 can be generally referred to as control means.

Control unit 77 causes encoding unit 72 to execute first conversion processing for converting an analog transmission signal (analog voice signal) to a digital transmission signal (digital voice signal) at a first bit rate when control unit 77 has not received reception confirmation from digital broadcasting reception unit 76, i.e., when no emergency alarm signal is being received.

In this exemplary embodiment, encoding unit 72 executes the first conversion processing when encoding unit 72 is not receiving a signal from control unit 77. Accordingly, in this exemplary embodiment, control unit 77 causes encoding unit 72 to execute the first conversion processing by providing no signal to encoding unit 72 when the emergency alarm signal is not being received.

Also, control unit 77 causes encoding unit 72 to execute second conversion processing for converting an analog transmission signal (analog voice signal) to a digital transmission signal (digital voice signal) at a second bit rate that is lower than the first bit rate when control unit 77 has received the reception confirmation signal from digital broadcasting reception unit 76, i.e. when the emergency alarm signal has been received.

In this exemplary embodiment, encoding unit 72 executes the second conversion processing upon receipt of a bit rate reduction signal from control unit 77. Accordingly, in this exemplary embodiment, control unit 77 causes encoding unit 72 to execute the second conversion processing by providing the bit rate reduction signal to encoding unit 72 when the emergency alarm signal has been received.

Conversion unit 7a can be generally referred to as converting means.

Conversion unit 7a executes the first conversion processing when the emergency alarm signal is not being received, and executes the second conversion processing when the emergency alarm signal has been received.

In this regard, IP telephone terminal 7 may be implemented by a computer which includes a communication feature and a voice input/output feature. In this event, the computer operates in accordance with a program recorded on a recording medium (recording medium readable by the computer) such as a hard disk drive. In this event, the computer reads and executes the program from the recording medium to function as microphone unit 71, encoding unit 72, interface unit 73, decoding unit 74, speaker unit 75, digital broadcasting reception unit 76, and control unit 77.

Next, the operation of IP telephone terminal 7 will be described.

Digital broadcasting reception unit 76 transmits a reception confirmation signal to control unit 77 upon receipt of an emergency alarm signal broadcast from broadcasting station 12 when a large-scale disaster occurs.

Upon receipt of the reception confirmation signal from digital broadcasting reception unit 76, control unit 77 transmits a bit rate reduction signal to encoding unit 72.

Encoding unit 72 encodes an analog voice signal from microphone unit 71 at a bit rate normally supported by each IP telephone terminal 7 to generate a digital voice signal at the first bit rate when the bit rate reduction signal is not being transmitted, i.e., in normal conditions. In other words, encoding unit 72 converts the analog voice signal from microphone unit 71 to a digital voice signal at the first bit rate in normal conditions.

Also, encoding unit 72 reduces the bit rate to a minimum level at which a conversation can be made, when a bit rate reduction signal is being transmitted, i.e., when a disaster occurs, and encodes an analog voice signal from microphone unit 71 at the reduced bit rate to generate a digital voice signal at the second bit rate. In other words, encoding unit 72 converts an analog voice signal form microphone unit 71 to a digital voice signal at the second bit rate when a disaster occurs.

The digital voice signal generated in encoding unit 72 is transmitted to IP switch 6 through interface unit 73.

Also, upon receipt of a digital voice signal from IP switch 6, interface unit 73 provides the received digital voice signal to decoding unit 74. Decoding unit 74 decodes the digital voice signal provided from interface unit 73 to generate an analog voice signal. Decoding unit 74 provides the analog voice signal to speaker unit 75. Speaker unit 75 outputs a voice corresponding to the provided analog voice signal that has been provided.

According to this exemplary embodiment, conversion unit 7a executes the first conversion processing when the emergency alarm signal is not being received, and executes the second conversion processing when the emergency alarm signal has been received.

Consequently, the amount of communicated data can be reduced from the time when the emergency alarm signal is received, i.e., from the time the number of calls is anticipated to increase. Accordingly, congestion can be avoided on the telephone network even if the amount of calls that are to be connected is not strictly limited, for example, in an emergency. It is therefore possible to minimize a reduction of the call connection ratio required for telephones in the event of a disaster.

Also, in this exemplary embodiment, encoding unit 72 uses an analog voice signal from microphone unit 71 as an analog transmission signal.

In this event, the amount of call data communicated on the telephone network can be reduced from the time when the number of calls is anticipated to increase. It is therefore possible to minimize a reduction of the call connection ratio required for telephones in the event of a disaster.

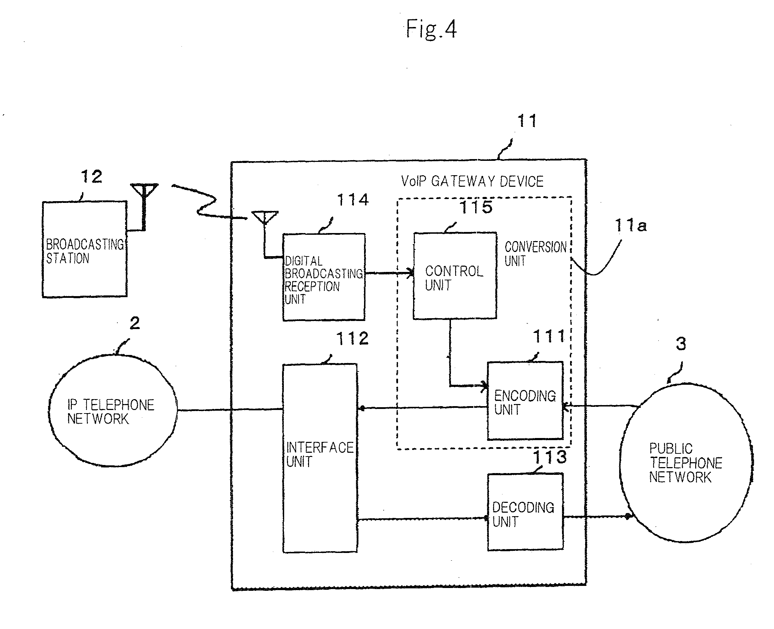

Fig. 4 is a block diagram representing a first exemplary embodiment of VoIP gateway device 11.

In Fig. 4, VoIP gateway device 11 can be generally referred to as a communication device.

VoIP gateway device 11 includes encoding unit 111, interface unit 112, decoding unit 113, digital broadcasting reception unit 114, and control unit 115. Encoding unit 111 and control unit 115 are included in conversion unit 11a.

Encoding unit 111 can be generally referred to as encoding means. Encoding unit 111 converts an analog transmission signal to a digital transmission signal. In this exemplary embodiment, encoding unit 111 uses an analog voice signal provided from public telephone network 3 as the analog transmission signal. Encoding unit 111 generates a digital voice signal by encoding the analog voice signal.

Interface unit 112 can be generally referred to as transmitting means. Interface unit 112 transmits the digital transmission signal generated by encoding unit 111, i.e., digital voice signal. This digital voice signal is provided to IP telephone network 2.

Also, interface unit 112 receives a digital voice signal destined to public telephone network 3 from IP telephone network 2. Interface unit 112 provides the received digital voice signal to decoding unit 113.

Decoding unit 113 decodes the digital voice signal provided from interface unit 112 to generate an analog voice signal. Decoding unit 113 provides the analog voice signal to public telephone network 3.

Digital broadcasting reception unit 114 can be generally referred to as receiving means.

Digital broadcasting reception unit 114 receives an emergency alarm signal transmitted from broadcasting station 12 in an emergency. Upon receipt of the emergency alarm signal, digital broadcasting reception unit 114 provides control unit 115 with a reception confirmation signal which indicates that the emergency alarm signal has been received.

Control unit 115 can be generally referred to as control means.

Control unit 115 causes encoding unit 111 to execute first conversion processing for converting an analog transmission signal (analog voice signal) to a digital transmission signal (digital voice signal) at a first bit rate when control unit 115 is not receiving reception confirmation from digital broadcasting reception unit 114, i.e., when no emergency alarm signal is being received.

In this exemplary embodiment, encoding unit 111 executes the first conversion processing when encoding unit 111 is not receiving a signal from control unit 115. Accordingly, in this exemplary embodiment, control unit 115 causes encoding unit 111 to execute the first conversion processing by providing no signal to encoding unit 111 when the emergency alarm signal is not being received.

Also, control unit 115 causes encoding unit 111 to execute second conversion processing for converting an analog transmission signal (analog voice signal) to a digital transmission signal (digital voice signal) at a second bit rate that is lower than the first bit rate when control unit 115 has received the reception confirmation signal from digital broadcasting reception unit 114, i.e. when the emergency alarm signal has been received.

In this exemplary embodiment, encoding unit 111 executes the second conversion processing upon receipt of a bit rate reduction signal from control unit 115. Accordingly, in this exemplary embodiment, control unit 115 causes encoding unit 111 to execute the second conversion processing by providing the bit rate reduction signal to encoding unit 111 when the emergency alarm signal has been received.

Conversion unit 11 a can be generally referred to as converting means.

Conversion unit 11 a executes the first conversion processing when the emergency alarm signal is not being received, and executes the second conversion processing when the emergency alarm signal has been received.

In this regard, IP gateway device 11 may be implemented by a computer which includes a communication feature and a voice input/output feature. In this event, the computer operates in accordance with a program recorded on a recording medium (recording medium readable by the computer) such as a hard disk drive. In this event, the computer reads and executes the program from the recording medium to function as encoding unit 111, interface unit 112, decoding unit 113, digital broadcasting reception unit 114, and control unit 115.

Next, the operation of VoIP gateway device 11 will be described.

Digital broadcasting reception unit 114 transmits a reception confirmation signal to control unit 115 upon receipt of an emergency alarm signal broadcast from broadcasting station 12 when a large-scale disaster occurs.

Upon receipt of the reception confirmation signal from digital broadcasting reception unit 114, control unit 115 transmits a bit rate reduction signal to encoding unit 111.

Encoding unit 111 encodes an analog voice signal from public telephone network 3 at a bit rate normally supported by VoIP gateway device 11 to generate a digital voice signal at the first bit rate when the bit rate reduction signal is not being transmitted, i.e., in normal conditions. In other words, encoding unit 111 converts the analog voice signal from public telephone network 3 to a digital voice signal at the first bit rate in normal conditions.

Also, encoding unit 111 reduces the bit rate to a minimum level at which a conversation can be made, when a bit rate reduction signal is being transmitted, i.e., when a disaster occurs, and encodes an analog voice signal from public telephone network 3 at the reduced bit rate to generate a digital voice signal at a second bit rate. In other words, encoding unit 111 converts an analog voice signal form public telephone network 3 to a digital voice signal at the second bit rate when a disaster occurs.

The digital voice signal generated in encoding unit 111 is transmitted to IP telephone network 2 through interface unit 112.

Also, upon receipt of a digital voice signal from IP telephone network 2, interface unit 112 provides the received digital voice signal to decoding unit 113. Decoding unit 113 decodes the digital voice signal provided from interface unit 112 to generate an analog voice signal. Decoding unit 113 provides the analog voice signal to public telephone network 3.

According to this exemplary embodiment, conversion unit 11a executes the first conversion processing when the emergency alarm signal is not being received, and executes the second conversion processing when the emergency alarm signal has been received.

Consequently, the amount of communicated data can be reduced from the time the emergency alarm signal is received, i.e., from the time the number of calls is anticipated to increase. Accordingly, congestion can be avoided on the telephone network even if the amount of calls that are to be connected is not strictly limited, for example, in an emergency. It is therefore possible to minimize a reduction of the call connection ratio required for telephones in the event of a disaster.

In this regard, the foregoing advantage can be provided as well, for example, even when VoIP gateway device 11 only has functions for encoding an analog voice signal from public telephone network 3 to generate a digital voice signal and only has a function for transmitting the digital voice signal to IP telephone network 2, i.e., even when decoding unit 113 is omitted from VoIP gateway device 11.

Also, in this exemplary embodiment, encoding unit 111 uses an analog voice signal from public telephone network 3 as an analog transmission signal. Also, interface unit 112 transmits a digital transmission signal to IP telephone network 2.

In this event, the amount of call data communicated on the telephone network can be reduced from the time when the number of calls is anticipated to increase by the VoIP gateway devices which operates in place of the terminal. It is therefore possible to minimize a reduction of the call connection ratio required for telephones in the event of a disaster.

As described above, according to the first exemplary embodiment, call data can be restrained on portable telephone network 1 and IP telephone network 2 by reducing the bit rate of a digital voice signal at each point at which an analog voice signal is encoded to the digital voice signal. As a result, data congestion can be avoided on portable telephone network 1 and IP telephone network 2.

### (Second Exemplary Embodiment)

Next, a second exemplary embodiment of the present invention will be described. The second exemplary embodiment does not differ from the first exemplary embodiment shown in Fig. 1 in the configuration of a telephone network, but differs as regards the configuration of the portable telephone terminal and IP telephone terminal.

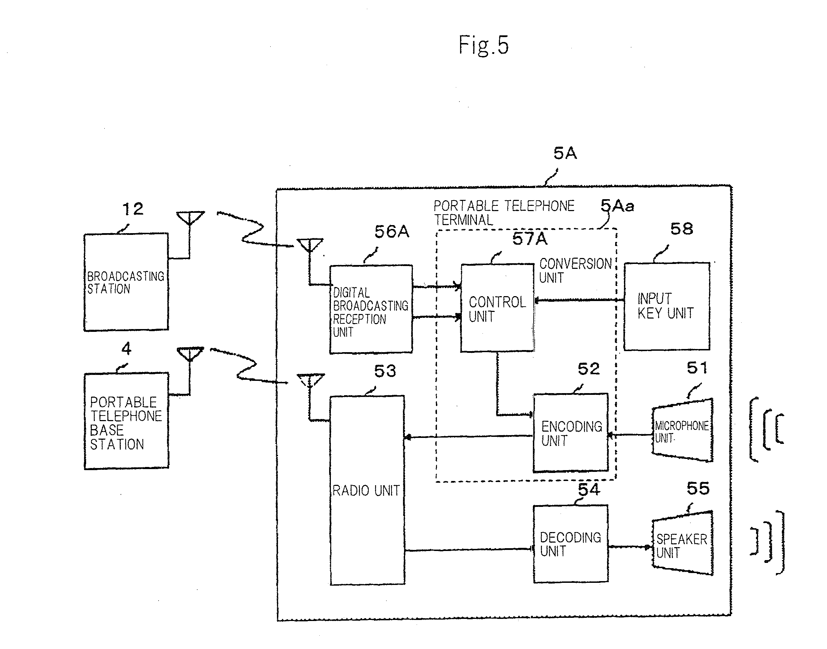

Fig. 5 is a block diagram representing a second exemplary embodiment of the portable telephone terminal. In Fig. 5, the same components as those shown in Fig. 2 are designated the same reference numerals.

Portable telephone terminal 5A shown in Fig. 5 differs from portable telephone terminal 5 shown in Fig. 2 in that portable telephone terminal 5A additionally includes input key unit 58, includes digital broadcasting reception unit 56A instead of digital broadcasting reception unit 56, and includes control unit 57A instead of control unit 57.

The following description of portable telephone terminal 5A will be centered on the differences with portable telephone terminal 5.

Portable telephone terminal 5A includes microphone unit 51, encoding unit 52, radio unit 53, decoding unit 54, speaker unit 55, digital broadcasting reception unit 56A, control unit 57A, and input key unit 58. Encoding unit 52 and control unit 57A are included in conversion unit 5Aa.

Input key unit 58 can be generally referred to as input means.

Input key unit 58 receives inputs from the user. For example, input key unit 58 receives communication destination area information for identifying the area which includes the destination of communications from portable telephone terminal 5A. In this regard, the communication destination area information may be, for example, an area name which directly represents an area of a communication destination, or a station number representative of an area for use by public telephone network 3.

Upon receipt of communication destination area information, input key unit 58 provides the communication destination area information to control unit 57A. Control unit 57A identifies the area of the communication destination based on the communication destination area information.

Digital broadcasting reception unit 56A can be generally referred to as receiving means.

Digital broadcasting reception unit 56A receives an emergency alarm signal containing the area code information (disaster area information), transmitted from broadcasting station 12 in an emergency. Upon receipt of the emergency alarm signal, digital broadcasting reception unit 56A provides control unit 57A with the area code information (disaster area information) within the emergency alarm signal and a reception confirmation signal.

Control unit 57A can be generally referred to as control means.

Control unit 57A causes encoding unit 52 to execute first conversion processing for converting an analog transmission signal (analog voice signal) to a digital transmission signal (digital voice signal) at a first bit rate when control unit 57A is not receiving reception confirmation from digital broadcasting reception unit 56, i.e., when no emergency alarm signal is being received.

In this exemplary embodiment, control unit 57A causes encoding unit 52 to execute the first conversion processing by providing no signal to encoding unit 52 when the emergency alarm signal is not being received.

Also, control unit 57A causes encoding unit 52 to execute the first conversion processing as well when the emergency alarm signal has been received, but a disaster area identified by the area code information (disaster area information) within the emergency alarm signal differs from the area of the communication destination identified by the communication destination area information.

Control unit 57A causes encoding unit 52 to execute second conversion processing for converting an analog transmission signal (analog voice signal) to a digital transmission signal (digital voice signal) at a second bit rate that is lower than the first bit rate when control unit 57A has received the reception confirmation signal, and when a disaster area identified by the area code information (disaster area information) within the emergency alarm signal matches an area of the communication destination identified by the communication destination area information.

In this exemplary embodiment, control unit 57A causes encoding unit 52 to execute the second conversion processing by providing a bit rate reduction signal to encoding unit 52 when the emergency alarm signal has been received, and when the disaster area identified by the area code information (disaster area information) within the emergency alarm signal matches the area of the communication destination identified by the communication destination area information.

Conversion unit 5Aa can be generally referred to as converting means.

Conversion unit 5Aa executes the first conversion processing when the emergency alarm signal is not being received, and executes the second conversion processing when the emergency alarm signal has been received.

More specifically, conversion unit 5Aa executes the second conversion processing when the emergency alarm signal has been received, and when the disaster area identified by the area code information (disaster area information) within the emergency alarm signal matches the area of the communication destination identified by the communication destination area information.

In this regard, portable telephone terminal 5A may be implemented by a computer which includes a communication feature and a voice input/output feature. In this event, the computer operates in accordance with a program recorded on a recording medium (recording medium readable by the computer) such as a hard disk drive. In this event, the computer reads and executes the program from the recording medium to function as microphone unit 51, encoding unit 52, radio unit 53, decoding unit 54, speaker unit 55, digital broadcasting reception unit 56A, control unit 57A, and input key unit 58.

Next, the operation of portable telephone terminal 5A will be described.

Upon receipt of an emergency alarm signal broadcast from broadcasting station 12 when a large-scale disaster occurs, digital broadcasting reception unit 56A extracts area code information contained in the emergency alarm signal, and transmits the area code information to control unit 57, as area information, together with a reception confirmation signal.

Upon receipt of the reception confirmation signal and area information, control unit 57A determines whether or not an area indicated by the area information matches the area of the communication destination previously entered through input key unit 58.

When the area indicated by the area information matches the area of the communication destination, control unit 57A transmits a bit rate reduction signal to encoding unit 52.

Since processing subsequent thereto is the same as the operation of portable telephone terminal 5, a description thereon is omitted.

According to this exemplary embodiment, conversion unit 5Aa executes the second conversion processing when the emergency alarm signal has been received, and when the disaster area identified by the area code information (disaster area information) within the emergency alarm signal matches the area of the communication destination identified by the communication destination area information.

In this event, the amount of call data communicated on the telephone network can be reduced in the disaster area and its neighborhood where the amount of calls is anticipated to concentrate, while the level of quality that exists in normal conditions can be maintained between the areas that are remote from the disaster area. Accordingly, even if the emergency alarm signal is received, a high quality level similar to the quality level in normal conditions can be accomplished for calls between areas which are not related to the disaster area.

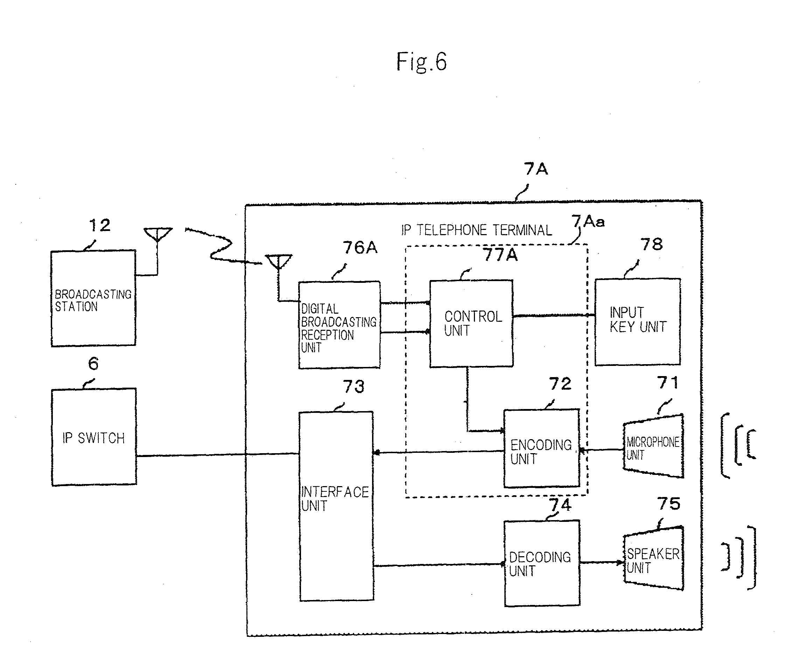

Fig. 6 is a block diagram representing a second exemplary embodiment of an IP telephone network. In Fig. 6, the same components as those shown in Fig. 3 are designated the same reference numerals.

IP telephone terminal 7A shown in Fig. 6 differs from IP telephone terminal 7 shown in Fig. 3 in that IP telephone terminal 7A further includes input key unit 78, includes digital broadcasting reception unit 76A instead of digital broadcasting reception unit 76, and includes control unit 77A instead of control unit 77.

The following description of IP telephone terminal 7A will be centered on differences with IP telephone terminal 7.

IP telephone terminal 7A includes microphone unit 71, encoding unit 72, interface unit 73, decoding unit 74, speaker unit 75, digital broadcasting reception unit 76A, control unit 77A, and input key unit 78. Encoding unit 72 and control unit 77A are included in conversion unit 7Aa.

Input key unit 78 can be generally referred to as input means.

Input key unit 78 receives inputs from the user. For example, input key unit 78 receives communication destination area information for identifying the area which includes the destination of communications from IP telephone terminal 7A. In this regard, the communication destination area information may be, for example, an area name which directly represents the area of a communication destination, or a station number that is representative of an area for use by public telephone network 3.

Upon receipt of the communication destination area information, input key unit 78 provides the communication destination area information to control unit 77A. Control unit 77A identifies the area of the communication destination based on the communication destination area information.

Digital broadcasting reception unit 76A can be generally referred to as receiving means.

Digital broadcasting reception unit 76A receives an emergency alarm signal containing the area code information (disaster area information), transmitted from broadcasting station 12 in an emergency. Upon receipt of the emergency alarm signal, digital broadcasting reception unit 76A provides control unit 77A with the area code information (disaster area information) within the emergency alarm signal and a reception confirmation signal.

Control unit 77A can be generally referred to as control means.

Control unit 77A causes encoding unit 74 to execute first conversion processing for converting an analog transmission signal (analog voice signal) to a digital transmission signal (digital voice signal) at a first bit rate when control unit 77A is not receiving reception confirmation from digital broadcasting reception unit 76A, i.e., when no emergency alarm signal is being received.

In this exemplary embodiment, control unit 77A causes encoding unit 72 to execute the first conversion processing by providing no signal to encoding unit 72 when the emergency alarm signal is not being received.

Also, control unit 77A causes encoding unit 72 to execute the first conversion processing as well when the emergency alarm signal has been received, but the disaster area identified by the area code information (disaster area information) within the emergency alarm signal differs from the area of the communication destination identified by the communication destination area information.

Control unit 77A causes encoding unit 72 to execute second conversion processing for converting an analog transmission signal (analog voice signal) to a digital transmission signal (digital voice signal) at a second bit rate that is lower than the first bit rate when Control unit 77A has received the reception confirmation signal, and when a disaster area identified by the area code information (disaster area information) within the emergency alarm signal matches the area of the communication destination identified by the communication destination area information.

In this exemplary embodiment, control unit 77A causes encoding unit 72 to execute the second conversion processing by providing a bit rate reduction signal to encoding unit 72 when the emergency alarm signal has been received, and when the disaster area identified by the area code information (disaster area information) within the emergency alarm signal matches the area of the communication destination identified by the communication destination area information.

Conversion unit 7Aa can be generally referred to as converting means.

Conversion unit 7Aa executes the first conversion processing when the emergency alarm signal is not being received, and executes the second conversion processing when the emergency alarm signal has been received.

More specifically, conversion unit 7Aa executes the second conversion processing when the emergency alarm signal has been received, and when the disaster area identified by the area code information (disaster area information) within the emergency alarm signal matches the area of the communication destination identified by the communication destination area information.

In this regard, IP telephone terminal 7A may be implemented by a computer which includes a communication feature and a voice input/output feature. In this event, the computer operates in accordance with a program recorded on a recording medium (recording medium readable by the computer) such as a hard disk drive. In this event, the computer reads and executes the program from the recording medium to function as microphone unit 71, encoding unit 72, radio unit 73, decoding unit 74, speaker unit 75, digital broadcasting reception unit 76A, control unit 77A, and input key unit 78.

Next, the operation of portable telephone terminal 7A will be described.

Upon receipt of an emergency alarm signal broadcast from broadcasting station 12 when a large-scale disaster occurs, digital broadcasting reception unit 76A extracts area code information contained in the emergency alarm signal, and transmits the area code information to control unit 77, as area information, together with a reception confirmation signal.

Upon receipt of the reception confirmation signal and area information, control unit 77A determines whether or not the area indicated by the area information matches the area of a communication destination previously entered through input key unit 78.

When the area indicated by the area information matches the area of the communication destination, control unit 77A transmits a bit rate reduction signal to encoding unit 72.

Since processing subsequent thereto is the same as the operation of IP telephone terminal 7, a description thereon in omitted.

According to this exemplary embodiment, conversion unit 7Aa executes the second conversion processing when the emergency alarm signal has been received, and when the disaster area identified by the area code information (disaster area information) within the emergency alarm signal matches the area of the communication destination identified by the communication destination area information.

In this event, the amount of call data communicated on the telephone network can be reduced in the disaster area and its neighborhood where the amount of calls is anticipated to concentrate, while the level of quality that exists in normal conditions can be maintained between the areas that are remote from the disaster area. Accordingly, even if the emergency alarm signal is received, a high quality level similar to the quality level in normal conditions can be accomplished for calls between areas not related to the disaster area.

Next, advantages of each exemplary embodiment will be described.

According to each exemplary embodiment described above, even when a large amount of calls is placed in the event of a large-scale disaster such as a large earthquake, it is possible to alleviate limitations to the amount of calls that can be made on the telephone network that are made for the purpose of preventing congestion in order to meet the need for increased use of telephones in the event of a disaster.

This is because the bit rate for encoding an analog voice signal to a digital signal is limited to the minimum level at which calls can be made, as triggered by the reception of the emergency alarm signal transmitted from the broadcasting station in the event of a large-scale disaster such as a large earthquake.

Thus, since the amount of calls that can be made on the entire telephone network is reduced, congestion can be avoided on the telephone network even without strictly limiting the amount of call connections. It is therefore possible to minimize a reduction of the call connection ratio required for telephones in the event of a disaster.

According to the second exemplary embodiment, in turn, the traffic can be reduced only in an area where calls that can be made on the telephone network concentrates in the event of a disaster, whereas the level of quality that exists in normal conditions can be maintained between the areas that are remote from the disaster area.

This is because the bit rate is reduced in the conversion processing (conversion processing) only when a disaster area identified from the area code information contained in the emergency alarm broadcasting matches the area of the communication destination to which a call is currently being made or a call is to be made from now on. Accordingly, a high quality level similar to the quality level in normal conditions can be accomplished for calls between areas not related to the disaster area.

It should be noted that the second bit rate is preferably at a minimum level at which a call can be made. However, the second bit rate may not be the minimum level at which a call can be made as long as the second bit rate is lower than the first bit rate.

An exemplary advantage of the present invention is the ability to restrain a reduction of the connection ratio required for the telephone in the event of a disaster.

While the invention has been particularly shown and described with reference to exemplary embodiments thereof, the invention is not limited to these exemplary embodiments. It will be understood by those of ordinary skill in the art that various changes in form and details may be made therein without departing from the spirit and scope of the present invention as defined by the claims.
Example 1 describes a communication device comprising:
   reception means for receiving an emergency alarm signal transmitted from a broadcasting station in an emergency;
   conversion means for executing first conversion processing for converting an analog transmission signal to a digital transmission signal at a first bit rate when the emergency alarm signal is not being received, and executing second conversion processing for converting the analog
      transmission signal to a digital transmission signal at a second bit rate that is lower than the first bit rate when the emergency alarm signal has been received; and
   transmission means for transmitting the digital transmission signal.
Example 2 describes the communication device according to example 1, further comprising input means for receiving communication destination area information for identifying an area of a communication destination,
   wherein said reception means receives the emergency alarm signal that contains disaster area information for identifying a disaster area, and
   said conversion means executes the second conversion processing when the emergency alarm signal has been received and when a disaster area identified by the disaster area code within the emergency alarm signal matches an area of a communication destination identified by the communication destination area information.
Example 3 describes the communication device according to example 1 or 2, further comprising microphone means for receiving a voice and generating an analog voice signal corresponding to the voice,
   wherein said conversion means uses the analog voice signal as the analog transmission signal.
Example 4 describes the communication device according to example 1, wherein:
   said conversion means uses an analog signal provided from a public telephone network as the analog transmission signal, and
   said transmission means transmits the digital transmission signal to an IP telephone network.
Example 5 describes a communication control method performed by a communication device, comprising:
   receiving an emergency alarm signal transmitted from a broadcasting station in an emergency;
   performing a conversion for executing first conversion processing for converting an analog transmission signal to a digital transmission signal at a first bit rate when the emergency alarm signal is not being received, and executing second conversion processing for converting the analog transmission signal to a digital transmission signal at a second bit rate that is lower than the first bit rate when the emergency alarm signal has been received; and
   transmitting the digital transmission signal.
Example 6 describes the communication control method according to example 5, further comprising receiving communication destination area information for identifying an area of a communication destination,
   wherein said receiving includes receiving the emergency alarm signal that contains disaster area information for identifying a disaster area, and
   said performing a conversion includes executing the second conversion processing when the emergency alarm signal has been received, and when a disaster area identified by the disaster area code within the emergency alarm signal matches an area of a communication destination identified by the communication destination area information. Example 7 describes the communication control method according to example 5 or 6, further comprising receiving a voice and generating an analog voice signal corresponding to the voice,
   wherein said performing a conversion uses the analog voice signal as the analog transmission signal.
Example 8 describes the communication control method according to example 5, wherein:
   said performing a conversion uses an analog signal provided from a public telephone network as the analog transmission signal, and
   said transmitting includes transmitting the digital transmission signal to an IP telephone network.
Example 9 describes a computer readable recording medium which has recorded thereon a program for causing a computer to execute:
   a reception procedure for receiving an emergency alarm signal transmitted from a broadcasting station in an emergency;
   a conversion procedure for performing a conversion for executing first conversion processing for converting an analog transmission signal to a digital transmission signal at a first bit rate when the emergency alarm signal is not being received, and executing second conversion processing for converting the analog transmission signal to a digital transmission signal at a second bit rate that is lower than the first bit rate when the emergency alarm signal has been received; and
   a transmission procedure for transmitting the digital transmission signal.
Example 10 describes the recording medium according to example 9, wherein said program causes said computer to further execute an input procedure for receiving communication destination area information for identifying an area of a communication destination,
   wherein said reception procedure includes receiving the emergency alarm signal that contains disaster area information for identifying a disaster area, and
   said conversion procedure includes executing the second conversion processing when the emergency alarm signal has been received, and when a disaster area identified by the disaster area code within the emergency alarm signal matches an area of a communication destination identified by the communication destination area information. Example 11 describes the recording medium according to example 9 or 10, wherein said program causes said computer to further execute an output procedure for receiving a voice and generating an analog voice signal corresponding to the voice,
   wherein said conversion procedure uses the analog voice signal as the analog transmission signal.
Example 12 describes the recording medium according to example 9, wherein:
   said conversion procedure uses an analog signal provided from a public telephone network as the analog transmission signal, and
   said transmission procedure transmits the digital transmission signal to an IP telephone network.

## Claims

1. A communication device comprising:
reception means for receiving an emergency alarm signal transmitted from a broadcasting station in an emergency;
conversion means for executing first conversion processing for converting an analog transmission signal to a digital transmission signal at a first bit rate when the emergency alarm signal is not being received, and executing second conversion processing for converting the analog transmission signal to a digital transmission signal at a second bit rate that is lower than the first bit rate when the emergency alarm signal has been received; and
transmission means for transmitting the digital transmission signal.

2. The communication device according to claim 1, further comprising input means for receiving communication destination area information for identifying an area of a communication destination,
wherein said reception means receives the emergency alarm signal that contains disaster area information for identifying a disaster area, and
said conversion means executes the second conversion processing when the emergency alarm signal has been received and when a disaster area identified by the disaster area code within the emergency alarm signal matches an area of a communication destination identified by the communication destination area information.

3. The communication device according to claim 1 or 2, further comprising microphone means for receiving a voice and generating an analog voice signal corresponding to the voice,
wherein said conversion means uses the analog voice signal as the analog transmission signal.

4. The communication device according to any of claims 1 to 3, wherein:
said conversion means uses an analog signal provided from a public telephone network as the analog transmission signal, and
said transmission means transmits the digital transmission signal to an IP telephone network.

5. A communication control method performed by a communication device, comprising:
receiving an emergency alarm signal transmitted from a broadcasting station in an emergency;
performing a conversion for executing first conversion processing for converting an analog transmission signal to a digital transmission signal at a first bit rate when the emergency alarm signal is not being received, and executing second conversion processing for converting the analog transmission signal to a digital transmission signal at a second bit rate that is lower than the first bit rate when the emergency alarm signal has been received; and
transmitting the digital transmission signal.

6. The communication control method according to claim 5, further comprising receiving communication destination area information for identifying an area of a communication destination,
wherein said receiving includes receiving the emergency alarm signal that contains disaster area information for identifying a disaster area, and
said performing a conversion includes executing the second conversion processing when the emergency alarm signal has been received and when a disaster area identified by the disaster area code within the emergency alarm signal matches an area of a communication destination identified by the communication destination area information.

7. The communication control method according to claim 5 or 6, further comprising receiving a voice and generating an analog voice signal corresponding to the voice,
wherein said performing a conversion uses the analog voice signal as the analog transmission signal.

8. The communication control method according to any of claims 5 to 7, wherein:
said performing a conversion uses an analog signal provided from a public telephone network as the analog transmission signal, and
said transmitting includes transmitting the digital transmission signal to an IP telephone network.

9. A computer readable recording medium which has recorded thereon a program for causing a computer to execute:
a reception procedure for receiving an emergency alarm signal transmitted from a broadcasting station in an emergency;
a conversion procedure for performing a conversion for executing first conversion processing for converting an analog transmission signal to a digital transmission signal at a first bit rate when the emergency alarm signal is not being received, and for executing second conversion processing for converting the analog transmission signal to a digital transmission signal at a second bit rate that is lower than the first bit rate when the emergency alarm signal has been received; and
a transmission procedure for transmitting the digital transmission signal.

10. The recording medium according to claim 9, wherein said program causes said computer to further execute an input procedure for receiving communication destination area information for identifying an area of a communication destination,
wherein said reception procedure includes receiving the emergency alarm signal that contains disaster area information for identifying a disaster area, and
said conversion procedure includes executing the second conversion processing when the emergency alarm signal has been received and when a disaster area identified by the disaster area code within the emergency alarm signal matches an area of a communication destination identified by the communication destination area information.

11. The recording medium according to claim 9 or 10, wherein said program causes said computer to further execute an output procedure for receiving a voice and generating an analog voice signal corresponding to the voice,
wherein said conversion procedure uses the analog voice signal as the analog transmission signal.

12. The recording medium according to any of claims 9 to 11, wherein:
said conversion procedure uses an analog signal provided from a public telephone network as the analog transmission signal, and
said transmission procedure transmits the digital transmission signal to an IP telephone network.
